# EUROPÄISCHE PATENTANMELDUNG

(11) **EP 3 199 609 A1**
(43) Veröffentlichungstag der Anmeldung: **02.08.2017**
(21) Anmeldenummer: 16000219.2
(22) Anmeldetag: 29.01.2016
(51) Int. Cl.: C10B 47/00, C10B 53/02, C10L 9/08

(54) **ANLAGE ZUR PYROLYTISCHEN VERARBEITUNG VON ORGANISCHEM MATERIAL BIOLOGISCHER HERKUNFT**

(71) Anmelder: AIVOTEC s.r.o., 76701 Kromeriz (CZ)
(72) Erfinder: Kána, Jan, 76701 Kromeriz (CZ)
(74) Vertreter: Markes, Libor

(57) **Zusammenfassung**

In der Anlage zur pyrolytischen Verarbeitung von organischem Material biologischer Herkunft durchläuft das Material sukzessiv die Prozesse der Homogenisierung, der Trocknung und der Pyrolyse mittels Abgaswärme des in einer Verbrennungskammer (10) verbrannten Pyrolysegases. An einen Abgasaustritt (11) der Verbrennungskammer (10) ist ein Dampferzeuger (12) angeschlossen, dessen Dampfaustritt an einen Dampfaktivator (8) für Biokohle und dessen Abgasaustritt (11) an eine Pyrolysekammer (5) angeschlossen sind, deren Biokohleaustritt (6) an den Dampfaktivator (8) und deren Abgasaustritt an einen Trockner (3) angeschlossen sind. Ein Pyrolysegasaustritt (7) aus der Pyrolysekammer (5) ist dabei an die Verbrennungskammer (10) angeschlossen.

## Beschreibung

Die Erfindung betrifft eine Anlage zur Verarbeitung von organischem Material biologischer Herkunft, in der das Material sukzessiv die Prozesse der Homogenisierung, der Trocknung und der Pyrolyse mittels Abgaswärme des in einer Verbrennungskammer verbrannten Pyrolysegases durchläuft. Unter organischem Material biologischer Herkunft sind insbesondere Materialien und Abfälle zu verstehen, die auf keine andere Weise nutzbar sind, z.B. getrennter Kommunalabfall, Abfall der Lebensmittelindustrie, der landwirtschaftlichen Urproduktion, der Abwasserreinigung u. dgl.

Es sind Verfahren zur pyrolytischen Verarbeitung von organischem Material, insbesondere der Reste von aerobem oder anaerobem biologischem Abbau bekannt, sowie die dazu entsprechenden Anlagen.

In der WO 0178123 ist eine Anlage beschrieben, die durch Vergasen von biogenen Materialien ein hochwertiges Gas produziert, das zum Verbrennen in einer Gasturbine bestimmt ist. In der Anlage werden Gärreste aus einem anaeroben Fermenter einer Biogasanlage erwärmt und getrocknet und der Pyrolyse in einem Rotationsofen unterzogen. Die Wärme wird dem Ofen von einer externen Wärmequelle geliefert. Zwei Medien kommen aus dem Ofen: Die Asche und das Pyrolysegas, das einer Wäsche unterworfen und dem Biogas aus dem Fermenter beigemischt wird. Dieses Gemisch wird einer Gasturbine zugeführt. Die in den Abgasen des Pyrolyseofens enthaltene Wärme wird zur Erwärmung und zum Trocknen der eintretenden Gärreste benutzt.

Nach der WO 2005063946 werden die Gärreste aus einem anaeroben Fermenter einem Pyrolyseofen zugeführt, aus dem einerseits Pyrolysegas in eine Verbrennungskammer, andererseits Biokohle in einen Vergaserraum kommt, dem zugleich Wasserdampf zugeführt wird. In dem Vergaserraum entsteht unter hoher Temperatur ein brennbares Gemisch von CO + H₂, das ebenso in die Verbrennungskammer geführt wird. Dort vermischt es sich mit dem Pyrolysegas und brennt. Die durch die Verbrennung entwickelte Wärme erzeugt und überhitzt den Dampf, der eine Dampfturbine betreibt.

Diese Lösungen haben zum Ziel, den organischen Abfall in ein hochwertiges Brenngas umzuwandeln, das zur energetischen Nutzung geeignet ist. Das feste Produkt der Karbonisation, die s.g. Biokohle, deren Wert darin besteht, dass sie langfristige Energielagerung ermöglicht, stellt in diesem Verfahren nur ein Zwischenprodukt dar.

Der Erfindung liegt die Aufgabe zu Grunde, eine anspruchslose, energetisch sparsame und unabhängige Anlage an die Hand zu geben, die eine komplexe Verarbeitung von Materialien biologischer Herkunft verschiedener Art und mit verschiedenen Parametern sicherstellt, und deren Hauptprodukt Biokohle - ein hochwertiger verkohlter Rest ist.

Erfindungsgemäß wird diese Aufgabe durch eine Anlage zur pyrolytischen Verarbeitung von organischem Material biologischer Herkunft gelöst, in der das Material sukzessiv die Prozesse der Homogenisierung, der Trocknung und der Pyrolyse mittels Abgaswärme des in einer Verbrennungskammer verbrannten Pyrolysegases durchläuft. An einen Abgasaustritt der Verbrennungskammer ist hier ein Dampferzeuger angeschlossen, dessen Dampfaustritt an einen Dampfaktivator für Biokohle und dessen Abgasaustritt an eine Pyrolysekammer angeschlossen sind, deren Biokohleaustritt an den Dampfaktivator und deren Abgasaustritt an einen Trockner angeschlossen sind. Eine Pyrolysegasleitung aus der Pyrolysekammer ist an die Verbrennungskammer angeschlossen.

Neben der Pyrolysegasleitung kann an die Verbrennungskammer eine externe Wärmequelle, vorzugsweise Abgase eines Blockheizkraftwerks, angeschlossen sein. Die Ausnutzung der Abgaswärme aus der externen Quelle erhöht einerseits die Produktionskapazität der Anlage, andererseits ermöglicht sie, das organische Material in einem kontinuierlichen Produktionsfluss zur Biokohle zu verarbeiten.

In einer vorteilhaften Ausführung der Anlage ist der Dampfaustritt aus dem Trockner über einen Kondensator und über einen Wärmetauscher an den Dampferzeuger angeschlossen, wobei der Wärmetauscher im Abgasfluss zwischen der Pyrolysekammer und dem Trockner eingeschaltet ist.

Der Dampfaustritt aus dem Dampfaktivator kann nach Abscheidung von Teer- und anderen Schmutzstoffen über den Kondensator und Wärmetauscher an den Dampferzeuger angeschlossen sein.

Weitere Einzelheiten der Erfindung werden anhand des in der Zeichnung dargestellten Ausführungsbeispiels näher erläutert.

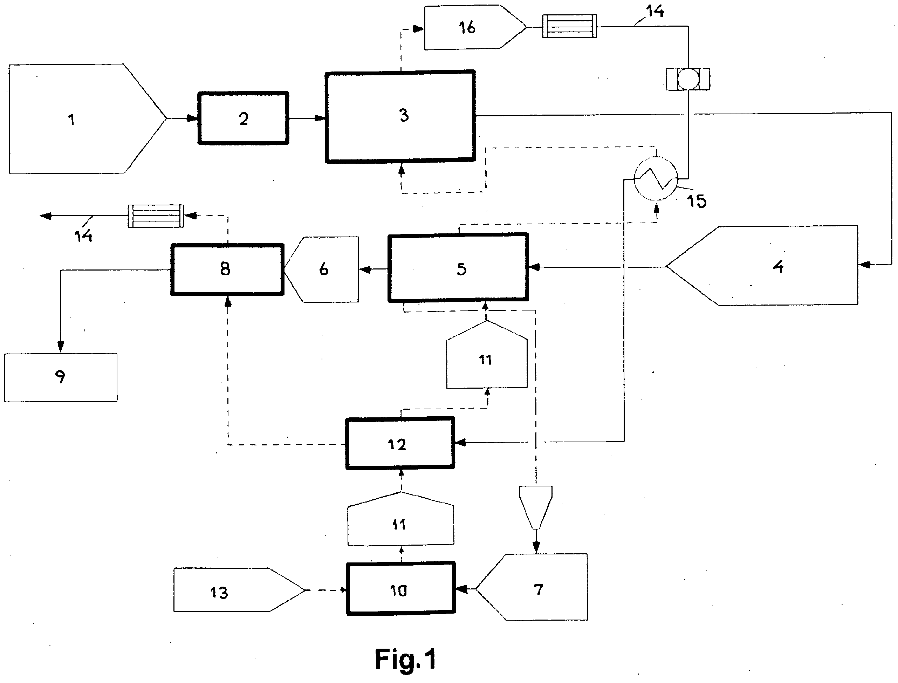

Fig. 1 zeigt ein Schaltbild einer Anlage zur Verarbeitung von organischem Material biologischer Herkunft und

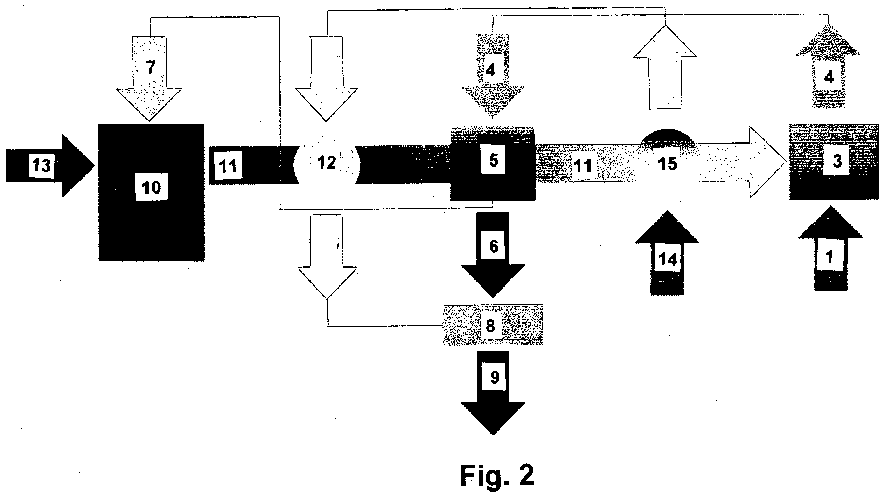

Fig. 2 zeigt ein Medienflussdiagramm, d.h. ein Diagramm der zu verarbeitenden Masse, der Gase und des Wassers/Dampfes.

Am Anlageneintritt 1 befindet sich organisches Material biologischer Herkunft, ein Gemisch von biologisch abbaubarem Kommunalabfall und sonstigem biologisch abbaubarem Abfall. Papier, Pappe, Küchenabfall, Abfall von gastronomischen Einrichtungen, Holzreste und Straßenkehricht sind überwiegende Bestandteile des Kommunalabfalls, während der sonstige Abfall durch Pflanzenabfall, Abwasserschlamm und stabilisierte Gärreste gebildet ist.

Der Materialeinsatz wird zerkleinert, passiert durch eine Homogenisierungsanlage 2 und einen Trockner 3. Das vorgetrocknete Material 4 tritt in eine Pyrolysekammer 5, wo die Pyrolyse unter einer Temperatur von 400° bis 500°C verläuft, deren Produkte einerseits Biokohle 6, andererseits Pyrolysegas 7 sind. Die Biokohle 6 wird in einen Dampfaktivator 8 geführt, aus dem als Endprodukt aktivierte Biokohle 9 austritt.

Das Pyrolysegas 7 wird in eine Verbrennungskammer 10 geführt, wo es brennt.

Seine Abgase 11 werden in einen Dampferzeuger 12 geführt. Eine externe Wärmequelle 13 ist an die Verbrennungskammer 10 angeschlossen. In dem gegebenen Fall handelt es sich um Abgase eines Motors eines Blockheizkraftwerks. Die Abgase 11 sind also ein Gemisch von Abgasen aus zwei Quellen. Der überhitzte Dampf aus dem Dampferzeuger 12 aktiviert die Biokohle 6 im Dampfaktivator 8, und nachdem er den Dampfaktivator 8 verlassen hat, kann er nach Kondensation und Reinigung als Kondensat 14 in den Kreislauf zurückgeleitet werden. Die Abgase 11, deren Temperatur noch 800°C beträgt, werden aus dem Dampferzeuger 12 als ein Heizmedium in die Pyrolysekammer 5 geleitet und nach dem Austritt passieren sie bei noch 300°C durch einen Wärmetauscher 15, wo sie den Kondensat 14 oder das in den Dampferzeuger 12 eintretende Wasser vorwärmen. Die Abgase 11 gehen noch mit einer Temperatur von ca 150°C in den Trockner 3, wo deren Restwärme das überflüssige Wasser aus dem homogenisierten Material abdampft. Danach werden sie als Abdampf 16 kondensiert, und das Kondensat 14 wird nach der Reinigung in dem Wärmetauscher 15 vorgewärmt und in den Dampferzeuger 12 geliefert.

Die beschriebene Anlage stellt ein geschlossenes energiesparendes System dar. das am Eintritt organisches Material biologiser Herkunft und am Austritt reine aktivierte Biokohle hat. Die in dem Prozess eingeschaltete Einrichtung zur Dampfaktivierung der Biokohle vergrößert deren spezifische Oberfläche in Größenordnug und beseitigt die Teerablagerungen in deren Poren, womit sich die Qualität der Biokohle wesentlich erhöht. Im Vergleich zu der chemischen Aktivierung benötigt die Dampfaktivierung keine Chemikalien, die nachträglich von der Biokohle entfernt werden müssten.

Die vorliegende Anlage eliminiert gleichzeitig das gewöhnlich genutzte Kompostieren von Bioabfällen, d.h. die aerobe Fermentation, die eine bedeutende Quelle von Treibhausgasen ist.

## Patentansprüche

1. Anlage zur pyrolytischen Verarbeitung von organischem Material biologischer Herkunft, in der das Material sukzessiv die Prozesse der Homogenisierung, der Trocknung und der Pyrolyse mittels Abgaswärme des in einer Verbrennungskammer (10) verbrannten Pyrolysegases durchläuft, **dadurch gekennzeichnet, dass** an einen Abgasaustritt (11) der Verbrennungskammer (10) ein Dampferzeuger (12) angeschlossen ist, dessen Dampfaustritt an einen Dampfaktivator (8) für Biokohle und dessen Abgasaustritt (11) an eine Pyrolysekammer (5) angeschlossen sind, deren Biokohleaustritt (6) an den Dampfaktivator (8) und deren Abgasaustritt an einen Trockner (3) angeschlossen sind, wobei ein Pyrolysegasaustritt (7) aus der Pyrolysekammer (5) an die Verbrennungskammer (10) angeschlossen ist.

2. Anlage nach Anspruch 1, **dadurch gekennzeichnet, dass** neben dem Pyrolysegasaustritts (7) eine externe Wärmequelle (13), vorzugsweise Abgase eines Blockheizkraftwerks, an die Verbrennungskammer angeschlossen ist.

3. Anlage nach Anspruch 1 oder 2, **dadurch gekennzeichnet, dass** der Dampfaustritt (16) aus dem Trockner (3) über einen Kondensator und einen Wärmetauscher (15) an den Dampferzeuger (12) angeschlossen ist, wobei der Wärmetauscher (15) im Abgasfluss zwischen der Pyrolysekammer (5) und dem Trockner (3) eingeschaltet ist.

4. Anlage nach einem der Ansprüche 1 bis 3, **dadurch gekennzeichnet, dass** der Dampfaustritt aus dem Dampfaktivator (8) nach Abscheidung von Teer- und anderen Schmutzstoffen über den Kondensator und den Wärmetauscher (15) an den Dampferzeuger (12) angeschlossen ist.
